# EUROPEAN PATENT APPLICATION

(11) **EP 4 650 526 A1**
(43) Date of publication of application: **19.11.2025**
(21) Application number: 23925836.1
(22) Date of filing: 03.04.2023
(51) Int. Cl.: E02F 9/00

(54) **AUTOMATIC BUCKET-OVERTURNING APPARATUS**

(30) Priority: 08.03.2023 CN 202310215113
(71) Applicant: Dalian Huarui Heavy Industry Group Co., Ltd., Dalian, Liaoning 116013 (CN)
(72) Inventor: MA, Chao, Dalian, Liaoning 116013 (CN); JI, Weidong, Dalian, Liaoning 116013 (CN); WANG, Peng, Dalian, Liaoning 116013 (CN); ZHAO, Yutang, Dalian, Liaoning 116013 (CN); GUO, Yongkang, Dalian, Liaoning 116013 (CN); LI, Chengbin, Dalian, Liaoning 116013 (CN); GROSSHAMMER, Harald, Dalian, Liaoning 116013 (CN); ELLIS, Matthew Arthur, Dalian, Liaoning 116013 (CN)
(74) Representative: Murgitroyd & Company
(86) International application number: PCT/CN2023/085876
(87) International publication number: WO 2024/183120

(57) **Abstract**

An automatic bucket-overturning apparatus, comprising: a specially shaped bucket (1), bucket-overturning locking apparatuses (A), a specially shaped overturning mechanism (6), a position detection apparatus (7), a fixed steel structure (8), a bucket rotating shaft (9) and a bucket wheel (10). The specially shaped bucket (1) is installed on an outer arc surface of the bucket wheel (10) and connected by means of a bucket rotating shaft (9), the specially shaped bucket (1) being able to rotate around the bucket rotating shaft (9) under action of an external force; the bucket-overturning locking apparatuses (A) are pairs of contact-type automatic locking mechanisms that are unlocked by external forces, and the bucket-overturning locking apparatuses are disposed at two sides of the bucket rotating shaft (9) of the specially shaped bucket (1); the bucket-overturning locking apparatuses on two sides of the bucket rotating shaft (9) are used to lock a first working position before overturning of the specially shaped bucket (1) and a second working position after overturning of the specially shaped bucket (1), respectively, and the bucket is automatically overturned depending on a rotating direction of an existing bucket wheel driving apparatus. The present apparatus can perform automatic reversing.

## Description

### TECHNICAL FIELD

The present invention relates to the field of bulk material handling machinery and mining machinery, in particular to a bucket arranged on a bucket wheel, or an automatic overturning apparatus for a material receiving mechanism in a bucket wheel reversible in a rotation direction used in a reclaimer, excavator, loader or any similar machine.

### BACKGROUND ART

For any bridge-type, portal-type or drum-type reclaimer or excavator used in any steel mill, wharf, mine or any other place, a two-way bucket needs to be installed on a reclaiming (digging) mechanism to realize reclaiming (digging) operations of the reclaimer or the excavator in both forward and backward directions, so as to improve the utilization rate of a stock ground and the working efficiency of the equipment.

Unlocking, flipping, and locking of existing two-way buckets are generally realized manually or automatically.

In a mechanism for manually overturning a bucket, the bucket is fixed on the body of a bucket wheel by means of pin shafts or bolts. For the purpose of turning over, the pin shafts or the bolts need to be manually removed, then the bucket is manually turned over, and finally the bucket is fixed by means of the pin shafts or the bolts after being overturned and put in place.

In the manual mode, operators are required to overcome the loads such as dead load, material deposit, and friction of the bucket. The loads of large reclaimers or excavators are very large, and even reach up to 10-20 kN, far exceeding the limit of human tolerance. Therefore, the process of manually overturning the bucket is uncontrolled and dangerous. In addition, in order to overturn the bucket, the operators have to enter a dangerous area for convenient operations, thus further increasing the accident risk. A bridge-type double-bucket-wheel reclaimer generally has nearly 20 buckets, and the operators need to overturn them one by one, resulting in that it is time-consuming and expensive.

### SUMMARY

To solve the above technical problems, the present invention provides a device that may be capable of automatically overturning a material receiving mechanism of a bucket wheel that can be rotated in a reverse direction. The present invention drives the bucket to automatically overturn by means of an automatic bucket-overturning apparatus, mainly relying on the rotation direction of an existing bucket wheel driving device. This automatic bucket-overturning apparatus is capable to achieve complete automatic reversing and meet the requirements of unmanned and intelligent operation of complete equipment. The present invention greatly improves the equipment utilization rate and operation efficiency, greatly reduces the workload and time of manual operations, completely avoids the occurrence of safety production accidents, and improves the equipment production capacity.

The technical means employed by the present invention are as follows:

An automatic bucket-overturning apparatus includes a plurality of special-shaped buckets, a plurality of bucket-overturning locking apparatuses, a special-shaped overturning mechanism, a fixed steel structure, a plurality of bucket rotating shafts, and a bucket wheel body.

The fixed steel structure is a frame support structure.

The plurality of special-shaped buckets are installed on the outer arc surface of the bucket wheel body, the plurality of special-shaped buckets and the bucket wheel body are connected by means of the plurality of bucket rotating shafts, and each of the plurality of special-shaped buckets is capable to rotate around its corresponding bucket rotating shaft under the action of an external force.

The plurality of bucket-overturning locking apparatuses are contact-type quick-locking mechanisms that are arranged in pairs and unlocked under the action of an external force, which are respectively arranged on both sides of the bucket rotating shaft of each of the special-shaped buckets and fixed to the bucket wheel body. The bucket-overturning locking apparatuses on both sides thereof are configured to lock a first working position of each of the special-shaped buckets before overturning and a second working position of that after overturning.

Two locking portions are disposed on a side wall of each of the special-shaped buckets facing to the bucket-overturning locking apparatuses, which are respectively engaged with the bucket-overturning locking apparatuses to realize fastening and locking.

An unlocking mechanism for unlocking the bucket-overturning locking apparatuses is fixed on a side, close to the bucket-overturning locking apparatuses, of the fixed steel structure.

The special-shaped overturning mechanism is a telescopic mechanism or a folding mechanism, which is fixed on the fixed steel structure and is oriented toward a direction of the special-shaped bucket after being stretched or unfolded, and the special-shaped overturning mechanism is located, when extended or unfolded, on a path of the two locking portions of each of the special-shaped buckets as the locking portions rotates with the bucket wheel body, that is, the special-shaped overturning mechanism in a protruding state works in coordination with one of the locking portions for blocking, and the rotation of the bucket wheel body drives the overturning of the plurality of the special-shaped buckets.

The automatic bucket-overturning apparatus of the present invention further includes a position detection device.

The position detection device is disposed on the fixed steel structure for detecting the position of the special-shaped bucket relative to the fixed steel structure, which conveniently control the bucket wheel body and the special-shaped bucket to stop rotating at a specific position. That is, the data of the position detection device are output to a control terminal of a control room in a wireless or wired manner.

Further, the plurality of bucket-overturning locking apparatuses are disposed on the outer arc surface of the bucket wheel body, and each of the plurality of special-shaped buckets corresponds to two bucket-overturning locking apparatuses, namely a lock hook device I and a lock hook device II, which are arranged symmetrically with a rotation axis of the bucket rotating shaft as a center line, and the positions of the two locking portions are arranged corresponding to the positions of the lock hook device I and the lock hook device II.

Further, the special-shaped overturning mechanism includes a stopping portion and a power portion configured to drive the stopping portion to stretch or overturn.

The stopping portion is connected with the fixed steel structure through pitching motion or by means of a slideway or a rotating steel frame, and is a reciprocating motion type steel frame. The power portion is a hydraulic cylinder, a pneumatic cylinder, an electric cylinder or any other actuator.

After the unlocking mechanism disengages the locking portion, the bucket wheel body and the special-shaped bucket continue to rotate, the stopping portion blocks the locking portion disposed on the side wall of the special-shaped bucket and close to the opening thereof. The bucket wheel body continues to rotate to drive the special-shaped bucket to overturn, and the blocking state between the stopping portion and the locking portion persists until the special-shaped bucket is overturned to a position where the center of gravity thereof exceeds the plumb line of the bucket rotating shaft.

When the bucket wheel body rotates, one stopping portion comes into contact with a corresponding locking portion on its side, whereupon the stopping portion lifts the locking portion, causing the special-shaped bucket to rotate around the bucket rotating shaft. As the bucket wheel body continues to rotate, and when the special-shaped bucket is overturned until its center of gravity exceeds the plumb line of the bucket rotating shaft, another stopping portion contacts with a corresponding locking portion on its side to prevent the special-shaped bucket from falling rapidly, so as to avoid damage to the equipment from vibration and impact. As the bucket wheel body continues to rotate, the special-shaped bucket is gradually overturned finally.

Further, the lock hook device I and the lock hook device II are elastic lock hooks built-in with self-resetting elastic components such as tension springs, compression springs, disc springs, torsion springs or the like. Each the lock hook device is provided with a lock hook and a lever handle respectively on its both outer sides, which are rigidly connected with each other through a pin shaft, and are connected with the internal elastic resetting component. The lock hook is configured to fit locking together with the locking portion, and the unlocking mechanism is capable to trigger the lever handle to disengage the lock hook from the locking portion.

Further, a protruding part of the unlocking mechanism is connected to the fixed steel structure through pitching motion or by means of a slideway or a rotating steel frame, where the protruding part is a reciprocating motion type steel frame, and is driven to protrude or unfold by a hydraulic cylinder, a pneumatic cylinder, an electric cylinder or any other actuator. When the protruding part is driven to a designated position, the protruding part is pressed on the lever handle of the bucket overturning locking device that needs to be unlocked, the bucket wheel body and the special-shaped bucket continue to rotate to make the locking portion and the lock hook of the bucket overturning locking device disengaged and unlocked. The lock hook device I, the lock hook device II and the unlocking mechanism are all mechanical structures with high reliability.

Further, the lock hook device I and the lock hook device II are both built-in with self-resetting elastic components such as tension springs, compression springs, torsion springs, disc springs or the like.

The locking portion on the side wall of the special-shaped bucket is of a lock pin structure, and is capable to press against an inclined plane at a front end of an elastic hook of a corresponding lock hook device under the gravity action of the special-shaped bucket. Since the elastic automatic resetting components are not capable to fully resist the gravity effect of the special-shaped bucket, the locking portion, after overturning, is automatically locked by the lock hook device.

Compared with the prior art, the present invention has the following advantages:
1. The structure of the special-shaped bucket is not changed, and only two locking portions (pins) are disposed on the side wall thereof, such that the transformation cost is extremely low, the structure is simple, and the reliability is high.
2. Locking and unlocking of the special-shaped bucket are realized in the form of mechanical structure, which has high reliability.
3. The unlocking action is simple and conveniently implemented by means of various structures, which requires less space for operation.
4. The special-shaped overturning mechanism is not only capable to realize the overturning of the bucket by skillfully using the locking portions (pins) on the special-shaped bucket, but also is capable to prevent the free-fall motion of the special-shaped bucket after its center of gravity exceeds the plumb line of the rotating shaft as well as the impact, vibration and noise on the bucket wheel body under the action of gravity. Moreover, precise size matching between the overturning mechanism and locking pins/overturning pins of the bucket is not required, and complete mechanical structure is adopted, having very high reliability.
5. Both the unlocking mechanism and the special-shaped overturning mechanism are disposed above the bucket wheel body, and the inherent platform in the side direction occupies a small space, facilitating the overhaul and maintenance of the equipment.
6. The present invention achieves complete automatic reversing and unmanned and intelligent operation of complete equipment. The use of the automatic bucket-overturning apparatus greatly improves the equipment utilization rate and operational efficiency, greatly reduces the workload and time of manual operations, completely avoids the occurrence of safety production accidents, and improves the equipment production capacity.

### BRIEF DESCRIPTION OF THE DRAWINGS

In order to more clearly describe the technical solutions in the examples of the present invention or in the prior art, a brief introduction to the accompanying drawings required for the description of the examples or the prior art will be made below. Apparently, the accompanying drawings in the following description are merely some embodiments of the present invention, and those of ordinary skill in the art would also be able to derive other drawings from these drawings without making creative efforts.
FIG. 1 is a structure schematic diagram when a position detection device of the present invention is triggered and a bucket wheel stops rotating.
FIG. 2 is a structure schematic diagram when a stopping portion of a special-shaped overturning mechanism of the present invention is in a stop state.
FIG. 3 is a structure schematic diagram of an unlocking mechanism and the special-shaped overturning mechanism of the present invention when they are driven to a designated position.
FIG. 4 is a structure schematic diagram when a lock hook device of the present invention is disengaged from a locking portion.
FIG. 5 is a structure schematic diagram when a bucket of the special-shaped overturning mechanism of the present invention is overturned by toggling the locking portion.
FIG. 6 is a structure schematic diagram when the stopping portion and the locking portion of the special-shaped overturning mechanism of the present invention cooperate to prevent the bucket from rapidly overturning under the action of its own gravity.
FIG. 7 is a structure schematic diagram of a special-shaped bucket of the present invention after completion of overturning.

In the figures: 1. special-shaped bucket, 2. lock hook device I, 3. lock hook device II, 4. special-shaped unlocking mechanism I, 5. special-shaped unlocking mechanism II, 6. special-shaped overturning mechanism, 61. stopping portion, 62. power portion, 7. position detection device, 8. fixed steel structure, 9. bucket rotating shaft, 10. bucket wheel body, 11. locking portion; and
A. bucket-overturning locking apparatus; and
B. unlocking mechanism.

### DETAILED DESCRIPTION OF THE EMBODIMENTS

It should be noted that the embodiments in the present invention and features in the embodiments can be combined without conflicts. The present invention will be described in detail below with reference to the accompanying drawings in conjunction with embodiments.

To make the objectives, technical solutions and advantages of embodiments of the present disclosure more obvious, the technical solutions of the present disclosure will be clearly and completely described below in conjunction with the accompanying drawings in the embodiments of the present disclosure, and obviously, the described embodiments are some, rather than all of the embodiments of the present disclosure. The following description of at least one example embodiment is merely illustrative in nature, and is in no way intended to limit the present disclosure, an application or use thereof. Based on the embodiments of the present disclosure, all other embodiments acquired by those ordinary skilled in the art without making creative efforts fall within the scope of protection of the present disclosure.

It should be noted that the terms used herein are only intended to describe specific embodiments and are not intended to limit the example embodiments of the present disclosure. As used herein, unless indicated obviously in the context, a singular form is also intended to include a plural form. In addition, it should also be understood that the terms "include" and/or "comprise" used in this specification indicate features, steps, operations, devices, components and/or their combinations.

Except as otherwise specifically set forth, the relative arrangement of components and steps, numerical expressions and numerical values set forth in these embodiments do not limit the scope of the present invention. In addition, it should be clear that, for ease of description, sizes of the various components shown in the accompanying drawings are not drawn according to actual proportional relationships. Technologies, methods, and devices known to those of ordinary skill in the relevant fields may not be discussed in detail, but where appropriate, the technologies, methods, and devices should be considered as a part of the authorization specification. In all the examples shown and discussed herein, any specific value should be interpreted as merely example rather than limiting. Therefore, other examples of the example embodiments may have different values. It should be noted that similar reference signs and letters represent similar items in the accompanying drawings below. Therefore, once an item is defined in one accompanying drawing, the item does not need to be further discussed in a subsequent accompanying drawing.

In the description of the present invention, it should be noted that orientations or position relationships indicated by orientation terms "front, rear, upper, lower, left, and right", "transverse, vertical, perpendicular, and horizontal", "top and bottom", and the like are usually based on orientations or position relationships shown in the accompanying drawings, and these terms are only used to facilitate description of the present invention and simplification of the description. In the absence of description to the contrary, these orientation terms do not indicate or imply that the apparatus or element referred to must have a specific orientation or be constructed and operated in a specific orientation, and therefore cannot be understood as a limitation on the protection scope of the present invention: orientation words "inner and outer" refer to the inside and outside relative to the contour of each component.

For ease of description, spatially relative terms such as "on", "over", "on the upper surface", and "above" can be used here, to describe a spatial positional relationship between one device or feature and another device or feature shown in the figures. It should be understood that the spatially relative terms are intended to include different orientations in use or operation other than the orientation of the device described in the figure. For example, if the device in the figure is inverted, the device described as "above another device or structure" or "on another device or structure" is then be positioned as being "below another device or structure" or "beneath a device or structure". Therefore, the exemplary term "above" can include both orientations "above" and "below". The device can also be positioned in other different ways (rotating by 90 degrees or in another orientation), and the spatially relative description used herein is explained accordingly.

In addition, it should be noted that using terms such as "first-stage" and "second-stage" to define components is only for the convenience of distinguishing the corresponding components. Unless otherwise stated, the foregoing words have no special meaning and therefore cannot be understood as a limitation on the protection scope of the present invention.

The present invention provides an automatic bucket-overturning apparatus, and the said device includes a plurality of special-shaped buckets 1, a plurality of bucket-overturning locking apparatuses A, a special-shaped overturning mechanism 6, a position detection device 7, a fixed steel structure 8, a plurality of bucket rotating shafts 9, and a bucket wheel body 10.

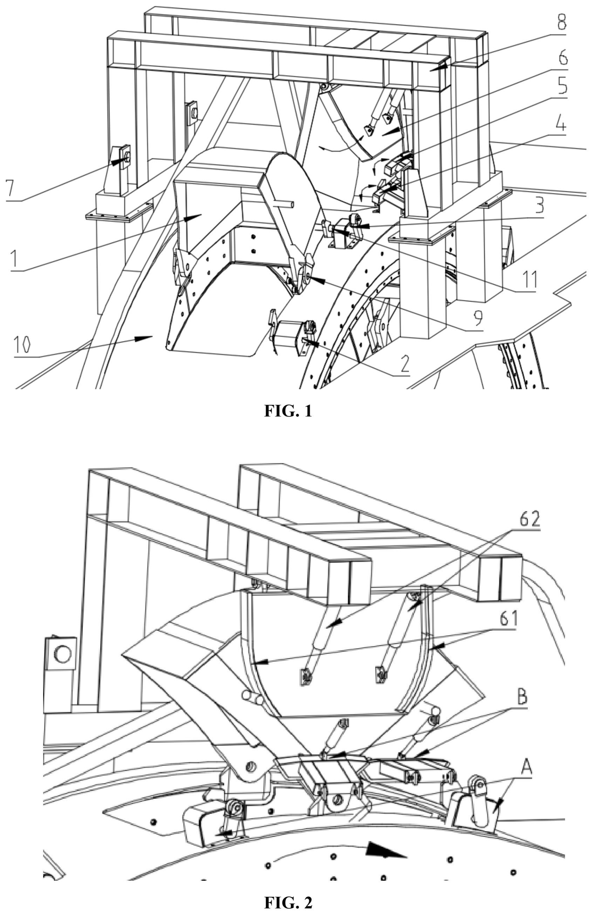

The fixed steel structure 8 is a frame support structure;
As shown in FIG. 1, the plurality of special-shaped buckets 1 are installed on the outer arc surface of the bucket wheel body 10, the plurality of special-shaped buckets and the bucket wheel body are connected by means of the plurality of the bucket rotating shafts 9, and each of the plurality of the special-shaped buckets 1 is capable to rotate around the bucket rotating shafts 9 under the action of an external force.

The plurality of bucket-overturning locking apparatuses A are contact-type quick-locking mechanisms that are arranged in pairs and unlocked under the action of an external force, which are respectively arranged on both sides of the bucket rotating shaft 9 of each of the plurality of the special-shaped buckets 1 and fixed to the bucket wheel body 10. The bucket-overturning locking apparatuses A on both sides thereof are configured to lock a first working position (the working position in the locking state when the bucket is not turned over) of the special-shaped bucket 1 before overturning and a second working position (the working position in the locked state after the bucket is turned over) of that after overturning.

Two locking portions 11 are disposed on a side wall each of the plurality of the special-shaped buckets 1 facing to the bucket-overturning locking apparatuses A, which are respectively engaged with the bucket-overturning locking apparatuses A to realize fastening and locking.

An unlocking mechanism B for unlocking the bucket-overturning locking apparatuses A is fixed on a side, close to the bucket-overturning locking apparatuses A, of the fixed steel structure 8.

The special-shaped overturning mechanism 6 is a telescopic mechanism or a folding mechanism, which is fixed on the fixed steel structure 8 and is oriented toward a direction of the special-shaped bucket 1 after being stretched or unfolded, and the special-shaped overturning mechanism 6 is located, when extended or unfolded, on a path of the two locking portions of the special-shaped buckets 1 as the locking portions rotates with the bucket wheel body 10. That is, the special-shaped overturning mechanism 6 in the protruding state works in coordination with one of the locking portions 11 for blocking, and the rotation of the bucket wheel body 10 drives the overturning of the plurality of the special-shaped buckets 1.

The position detection device 7 is disposed on the fixed steel structure 8. A plurality of the position detection devices are symmetrically arranged, generally including microwave sensors, photoelectric sensors, proximity switches, radars, impact monitoring systems, artificial intelligence systems or other types of electric detection elements, which are configured to detect the position of the special-shaped bucket 1 relative to the fixed steel structure 8, and conveniently control the bucket wheel body 10 and the special-shaped bucket 1 to stop rotating at a specific position. When the bucket wheel body 10 and the special-shaped bucket 1 are at the specific position, it can be guaranteed that the unlocking mechanism B and the special-shaped overturning mechanism 6 will not interfere with the special-shaped bucket 1 after stretching out.

Data of the position detection device 7 are output to control a terminal of a control room in a wireless or wired manner.

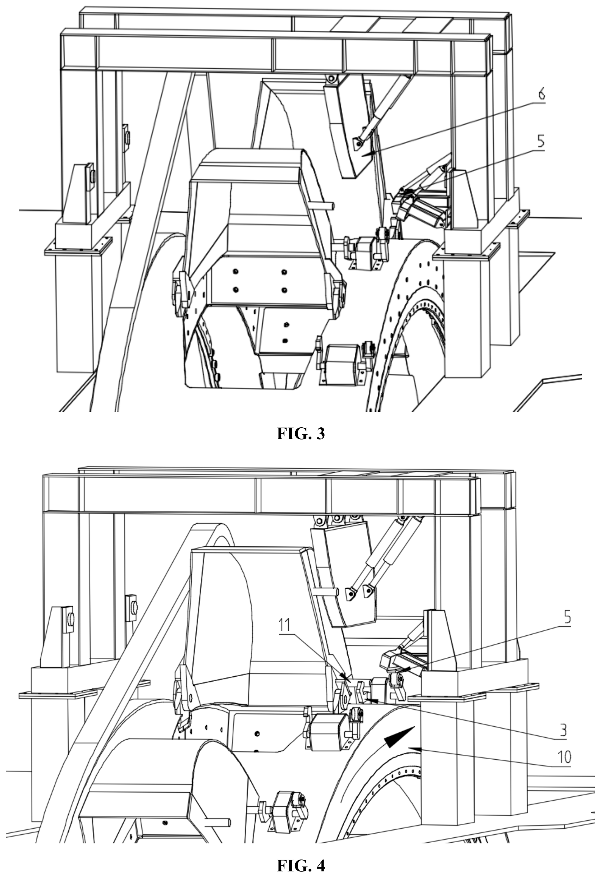

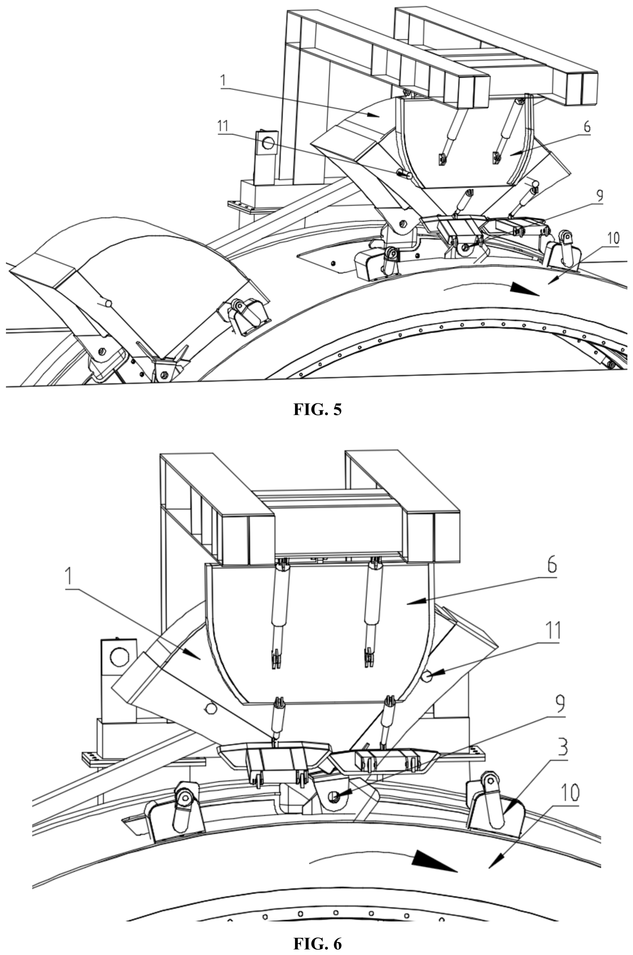

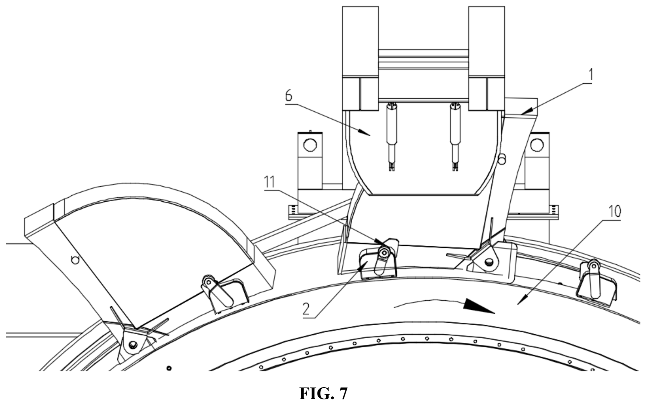

Further, the plurality of bucket-overturning locking apparatuses A are installed on the outer arc surface of the bucket wheel body, and each of the plurality of special-shaped buckets 1 corresponds to two bucket-overturning locking apparatuses A, namely a lock hook device I 2 and a lock hook device II 3, which are arranged symmetrically with a rotation axis of the bucket rotating shaft 9 as the center line, and the positions of the two locking portions 11 are disposed corresponding to the positions of the lock hook device I 2 and the lock hook device II 3. The lock hook device I 2 and the lock hook device II 3 act on the locking portions 11, and can fix the corresponding special-shaped bucket 1 on the bucket wheel body 10. The lock hook device II 3 in FIGs. 1 and 3 acts on the locking portion 11 on its corresponding side, both the lock hook device I 2 and the lock hook device II 3 in FIGs. 5 and 6 do not act on the locking portions, and the lock hook device I 2 in FIG. 7 acts on the locking portion 11 on the other side.

Before the operation in the overturning mode, the reclaimer or the excavator should stop the reclaiming operation and empty the materials in the special-shaped bucket 1.

The unlocking mechanism B includes a special-shaped unlocking mechanism I 4 and a special-shaped unlocking mechanism II 5 corresponding to the positions of the lock hook device I 2 and the lock hook device II 3 respectively.

As shown in FIG. 1, the lock hook device I 2 and the lock hook device II 3 are installed on the outer arc surface of the bucket wheel body 10. Each the special-shaped bucket 1 corresponds to two lock hook devices (the lock hook device I 2 and the lock hook device II 3) arranged symmetrically with a rotation axis of the bucket rotating shaft 9 as the center line. The lock hook device I 2 (or the lock hook device II 3) acts on locking pins/overturning pins, and can fix the bucket 1 on the bucket wheel body 10. The lock hook device II 3 in FIGs. 1 and 3 acts on the locking pins/overturning pins 11, both the lock hook device I 2 and the lock hook device II 3 in FIGs. 5 and 6 do not act thereon, and the lock hook device I 2 in FIG. 7 acts on the locking pins/overturning pins 11.

Further, the special-shaped overturning mechanism 6 includes a stopping portion 61 and a power portion 62 configured to drive the stopping portion 61 to stretch or overturn.

The stopping portion 61 is connected with the fixed steel structure 8 through pitching motion or by means of a slideway or a rotating steel frame, and is a reciprocating motion type steel frame. The power portion 62 is a hydraulic cylinder, a pneumatic cylinder, an electric cylinder or any other actuator.

After the unlocking mechanism B disengages the locking portion 11, the bucket wheel body 10 and the special-shaped bucket 1 continue to rotate, the stopping portion 61 blocks the locking portion 11 disposed on the side wall of the special-shaped bucket 1 and close to the opening thereof. The bucket wheel body 10 continues to rotate to drive the special-shaped bucket 1 to overturn, and the blocking state between the stopping portion 61 and the locking portion 11 persists until the special-shaped bucket 1 is overturned to a position where its center of gravity exceeds the plumb line of the rotating shaft 9.

When the bucket wheel body 10 rotates, one stopping portion 61 comes into contact with a corresponding locking portion 11 on its side, whereupon the stopping portion 61 lifts the locking portion 11, causing the special-shaped bucket 1 to rotate around the bucket rotating shaft 9. As the bucket wheel body 10 continues to rotate, and when the special-shaped bucket 1 is overturned until its center of gravity exceeds the plumb line of the bucket rotating shaft 9, another stopping portion 61 contacts with the a corresponding locking portion 11 on its side to prevent the special-shaped bucket 1 from falling rapidly, so as to avoid damage to the equipment from vibration and impact. As the bucket wheel body 10 continues to rotate, the special-shaped bucket is gradually overturned finally, as shown in FIGs. 5 and 6.

Further, the distance between the parts of sidewalls, in contact with the locking portion 11, of the stopping portion 61 is a gradually shrinking tapered shape, and the surfaces of both sidewalls are curved surfaces.

As shown in FIG. 3, a driving mechanism drives the special-shaped unlocking mechanism I 4 or the special-shaped unlocking mechanism II 5 and the special-shaped overturning mechanism 6 to enter an open area between two special-shaped buckets 1, avoiding that the special-shaped unlocking mechanism I 4, the special-shaped unlocking mechanism II 5, and the special-shaped overturning mechanism 6 interfere with the bucket 1 during operation. The motion direction is indicated by an arrow in FIG. 1. It should be noted that the special-shaped unlocking mechanism I 4 and the special-shaped unlocking mechanism II 5 are respectively configured for overturning the bucket 1 in the forward and reverse rotation directions, and cannot be used at the same time. In FIGs. 1 and 3, the lock hook of the lock hook device 3 locks the locking pins/overturning pins 11, so that the bucket 1 is fixed.

Further, the lock hook device I 2 and the lock hook device II 3 are elastic lock hooks built-in with self-resetting elastic components such as tension springs, compression springs, disc springs, torsion springs or the like. Each the lock hook device is provided with a lock hook and a lever handle respectively on its both outer sides, which are rigidly connected with each other through a pin shaft, and are connected with the internal elastic resetting component. The lock hook is configured to fit locking together with the locking portion 11, and the unlocking mechanism B is capable to trigger the lever handle to disengage the lock hook from the locking portion 11.

As shown in FIG. 3, the special-shaped unlocking mechanism II 5 is driven to a designated position. The special-shaped unlocking mechanism I 4 and the special-shaped unlocking mechanism II 5 are connected with the fixed steel structure through pitching motion or by means of a slideway or a rotating steel frame, and are driven to change position in manners of hydraulic, electric, pneumatic or in any other driving mode. The motion direction is indicated by an arrow in FIG. 1.

As shown in FIG. 3, the special-shaped overturning mechanism 6 is driven to a designated position. The stopping portion is connected with the fixed steel structure through pitching motion or by means of a slideway or a rotating steel frame, and is driven to change position in manners of hydraulic, electric, pneumatic or in any other driving mode. The direction of motion is indicated by an arrow in FIG. 1.

Further, a protruding part of the unlocking mechanism B is connected to the fixed steel structure 8 through pitching motion or by means of a slideway or a rotating steel frame, where the protruding part is a reciprocating motion type steel frame, and is driven to protrude or unfold by a hydraulic cylinder, a pneumatic cylinder, an electric cylinder or any other actuator. When the protruding part is driven to the designated position and is pressed on the lever handle of the bucket overturning locking device A that needs to be unlocked, the bucket wheel body 10 and the special-shaped bucket 1 continue to rotate to make the locking portion 11 and the lock hook of the bucket overturning locking device A disengaged and unlocked. The first lock hook device I 2, the second lock hook device II 3, and the unlocking mechanisms B are all mechanical structures with high reliability.

Further, the lock hook device I 2 and the lock hook device II 3 are both built-in with self-resetting elastic components such as tension springs, compression springs, torsion springs, disc springs or the like.

The locking portion 11 on the side wall of the special-shaped bucket 1 is of a lock pin structure, and is capable to press against an inclined plane at a front end of an elastic hook of a corresponding lock hook device under the gravity action of the special-shaped bucket 1. Since the elastic automatic resetting components are not capable to fully resist the gravity effect of the special-shaped bucket, the locking portion 11, after overturning, is automatically locked by the lock hook device.

As shown in FIG. 4, after the special-shaped unlocking mechanism I4 is driven to the designated position, the bucket wheel body 10 starts to rotate relying on the existing driving device, and the steel frame of the special-shaped unlocking mechanism II 5 is pressed on a lever handle pulley of the lock hook device II 3 to disengage the lock hook device II 3 from the locking pin/overturning pin 11 (i.e., the locking portion 11), so that the special-shaped bucket 1 is unlocked.

As shown in FIG. 5, after the lock hook device II 3 is unlocked by the special-shaped unlocking mechanism II 5, the locking pin/overturning pin 11 (i.e., the locking portion 11) is disengaged from the lock hook device II 3, the bucket wheel body 10 continues to rotate relying on the existing driving device, the overturning steel frame (i.e., the stopping portions 61) of the special-shaped overturning mechanism 6 contacts the locking pin/overturning pin 11 (i.e., the locking portion 11) on the other side of the side wall of the special-shaped bucket 1, and the special-shaped bucket 1 rotates around the bucket rotating shaft 9.

As shown in FIG. 6, in the overturning process, the special-shaped bucket 1, after its center crosses the center line position thereof, begins to fall relying on its own gravity, and the overturning steel frame (the stopping portion 61) of the special-shaped overturning mechanism 6 is capable to prevent the fast free falling of the bucket due to its symmetrical structure and the curved surface structures of the sidewalls, avoiding damage to the equipment from vibration and impact, and results in that the special-shaped bucket 1 is gradually overturned. The rotation direction of the bucket wheel body 10 is shown in the figure.

As shown in FIG. 7, each of the lock hook device I 2 and the lock hook device II 3 is provided with elastic automatic resetting components, generally including tension springs, compression springs, torsion springs, disc springs or the like. The locking pin/overturning pin 11 (the locking portion 11) on the sidewall of the special-shaped bucket 1 are automatically locked by the lock hook device I 2. The rotation direction of the bucket wheel body 10 is shown in the figure.

The bucket wheel body 10 keeps rotating by relying on the existing driving device which drives the plurality of special-shaped buckets 1 arranged on the circumference of the bucket wheel body to overturn one by one until all the buckets are overturned. The rotation direction of the bucket wheel body 10 is shown in FIG. 6.

The automatic overturning of each the special-shaped bucket 1 is performed in the middle of an upper area of the bucket wheel body 10, it can be avoid the impact and accumulation of materials in this area during the working process.

Finally, it should be noted that the above embodiments are only used to illustrate the technical solutions of the present invention, but not to limit them; although the present invention has been described in detail with reference to the foregoing embodiments, those ordinarily skilled in the art should understand that: the technical solutions described in the foregoing embodiments can still be modified, or some or all of the technical features thereof can be equivalently replaced; and these modifications or replacements do not make the essence of the corresponding technical solutions deviate from the scope of the technical solutions of the embodiments of the present invention.

## Claims

1. An automatic bucket-overturning apparatus, comprising: a plurality of special-shaped buckets (1), a plurality of bucket-overturning locking apparatuses (A), a special-shaped overturning mechanism (6), a fixed steel structure (8), a plurality of bucket rotating shafts (9), and a bucket wheel body (10), wherein,
the fixed steel structure (8) is a frame support structure;
the plurality of special-shaped buckets (1) are disposed on the outer arc surface of the bucket wheel body (10), the plurality of special-shaped buckets and the bucket wheel body are connected by means of the plurality of bucket rotating shafts (9), and each of the plurality of special-shaped buckets (1) is capable to rotate around its corresponding bucket rotating shaft (9) under the action of an external force;
the plurality of bucket-overturning locking apparatuses (A) are contact-type quick-locking mechanisms that are arranged in pairs and unlocked under the action of an external force, which are respectively arranged on both sides of the bucket rotating shaft of each of the special-shaped buckets (1) and fixed to the bucket wheel body (10), and the bucket-overturning locking apparatuses (A) on both sides thereof are configured to lock a first working position of each of the special-shaped buckets before overturning and a second working position of that after overturning;
two locking portions (11) are disposed on a side wall of each of the special-shaped buckets (1) facing to the bucket-overturning locking apparatuses (A), which are respectively engaged with the bucket-overturning locking apparatuses (A) to realize fastening and locking;
an unlocking mechanism (B) for unlocking the bucket-overturning locking apparatuses (A) is fixed on a side, close to the bucket-overturning locking apparatuses (A), of the fixed steel structure (8); and
the special-shaped overturning mechanism (6) is a telescopic mechanism or a folding mechanism, which is fixed on the fixed steel structure (8) and is oriented toward a direction of the special-shaped bucket (1) after being stretched or unfolded, and the special-shaped overturning mechanism (6) is located, when extended or unfolded, on a path of the two locking portions (11) of each of the special-shaped buckets (1) as the locking portions rotates with the bucket wheel body (10), that is, the special-shaped overturning mechanism (6) in a protruding state works in coordination with one of the locking portions (11) for blocking, and the rotation of the bucket wheel body (10) drives the overturning of the plurality of the special-shaped buckets (1).

2. The automatic bucket-overturning apparatus according to claim 1, further comprising:
a position detection device (7) disposed on the fixed steel structure (8) for detecting the position of the special-shaped bucket (1) relative to the fixed steel structure (8), which conveniently control the bucket wheel body (10) and the special-shaped bucket (1) to stop rotating at a specific position.

3. The automatic bucket-overturning apparatus according to claim 2, wherein
the plurality of bucket-overturning locking apparatuses (A) are disposed on the outer arc surface of the bucket wheel body, and each of the plurality of special-shaped buckets (1) corresponds to two bucket-overturning locking apparatuses (A), namely a lock hook device I (2) and a lock hook device II (3), which are arranged symmetrically with a rotation axis of the bucket rotating shaft (9) as a center line, and the positions of the two locking portions (11) are disposed corresponding to the positions of the lock hook device I (2) and the lock hook device II (3).

4. The automatic bucket-overturning apparatus according to claim 1 or 2 or 3, wherein
the special-shaped overturning mechanism (6) comprises a stopping portion (61) and a power portion (62) configured to drive the stopping portion (61) to stretch or overturn;
the stopping portion (61) is connected with the fixed steel structure (8) through pitching motion or by means of a slideway or a rotating steel frame, the stopping portion is a reciprocating motion type steel frame, and the power portion (62) is a hydraulic cylinder, a pneumatic cylinder, an electric cylinder or any other actuator; and
after the unlocking mechanism (B) disengages the locking portion (11), the bucket wheel body (10) and the special-shaped bucket (1) continue to rotate, the stopping portion (61) blocks the locking portion (11) disposed on the side wall of the special-shaped bucket (1) and close to the opening thereof, the bucket wheel body (10) continues to rotate to drive the special-shaped bucket (1) to overturn, and the blocking state between the stopping portion (61) and the locking portion (62) persists until the special-shaped bucket (1) is overturned to a position where the center of gravity thereof exceeds the plumb line of the bucket rotating shaft (9).

5. The automatic bucket-overturning apparatus according to claim 3, wherein
the lock hook device I(2) and the lock hook device II(3) are elastic lock hooks built-in with self-resetting elastic components such as tension springs, compression springs, disc springs, torsion springs or the like; each the lock hook device is provided with a lock hook and a lever handle respectively on its both outer sides, which are rigidly connected with each other through a pin shaft, and are connected with the internal elastic resetting component; the lock hook is configured to fit locking together with the locking portion (11), and the unlocking mechanism (B) is capable to trigger the lever handle to disengage the lock hook from the locking portion (11).

6. The automatic bucket-overturning apparatus according to claim 4, wherein
a protruding part of the unlocking mechanism (B) is connected to the fixed steel structure (8) through pitching motion or by means of a slideway or a rotating steel frame, wherein the protruding part is a reciprocating motion type steel frame, and is driven to protrude or unfold by a hydraulic cylinder, a pneumatic cylinder, an electric cylinder or any other actuator; when the protruding part is driven to a designated position, the protruding part is pressed on the lever handle of the bucket overturning locking device (A) that needs to be unlocked, the bucket wheel body (10) and the special-shaped bucket (1) continue to rotate to make the locking portion (11) and the lock hook of the bucket overturning locking device (A) disengaged and unlocked.

7. The automatic bucket-overturning apparatus according to claim 5, wherein
the lock hook device I (2) and the lock hook device II (3) are both built-in with self-resetting elastic components such as tension springs, compression springs, torsion springs and disc springs.
the locking portion on the side wall of the special-shaped bucket (1) is of a lock pin structure, and is capable to press against an inclined plane at a front end of an elastic hook of a corresponding lock hook device under the gravity action of the special-shaped bucket (1); since the elastic automatic resetting components are not capable to fully resist the gravity effect of the special-shaped bucket, the locking portion (11), after overturning, is automatically locked by the lock hook device.

8. The automatic bucket-overturning apparatus according to claim 4, wherein
when the bucket wheel body (10) rotates, one stopping portion (61) comes into contact with a corresponding locking portion (11) on its side, whereupon the stopping portion (61) lifts the locking portion (11), causing the special-shaped bucket (1) to rotate around the bucket rotating shaft (9); as the bucket wheel body (10) continues to rotate, and when the special-shaped bucket (1) is overturned until its center of gravity exceeds the plumb line of the bucket rotating shaft (9), another stopping portion (61) contacts with a corresponding locking portion (11) on its side to prevent the special-shaped bucket (1) from falling rapidly, so as to avoid damage to the equipment from vibration and impact; and as the bucket wheel body (10) continues to rotate, the special-shaped bucket is gradually overturned finally.
